# EUROPÄISCHE PATENTSCHRIFT

(11) **EP 4 440 804 B1**
(45) Veröffentlichungstag und Bekanntmachung des Hinweises auf die Patenterteilung: **17.09.2025**
(21) Anmeldenummer: 22822358.2
(22) Anmeldetag: 24.11.2022
(51) Int. Cl.: B44B 5/02, B29C 43/36, B41M 5/00, B27N 3/20, B27N 7/00, B41C 1/00, B29C 64/112, B29C 43/02, B29C 64/106, B44C 5/04, B44C 3/02, B44C 1/22, B41J 3/407, B41J 3/00, B41J 2/135, B30B 15/06, B29C 33/38

(54) **VERFAHREN UND DRUCKERVORRICHTUNG ZUM HERSTELLEN EINES PRESSWERKZEUGS**
METHOD AND PRINTER DEVICE FOR PRODUCING A PRESSING TOOL
PROCÉDÉ ET DISPOSITIF D'IMPRESSION POUR PRODUIRE UN OUTIL DE PRESSAGE

(30) Priorität: 02.12.2021 DE 102021131838
(43) Veröffentlichungstag der Anmeldung: 09.10.2024
(73) Patentinhaber: HUECK Rheinische GmbH, 41747 Viersen (DE)
(72) Erfinder: THÖLEN, Berthold, 41748 Viersen (DE)
(74) Vertreter: Burger, Hannes Alfred
(86) Internationale Anmeldenummer: PCT/EP2022/083140
(87) Internationale Veröffentlichungsnummer: WO 2023/099332

(56) Entgegenhaltungen:
- WO-A1-2015/024609
- WO-A1-2017/081008
- WO-A1-2019/068627
- WO-A1-2020/178666
- DE-A1- 102019 127 657
- DE-A1- 102019 127 658
- EA-B1- 030 050
- US-A1- 2015 064 400
- US-A1- 2016 144 433

## Beschreibung

Die Erfindung betrifft ein Verfahren und eine Druckervorrichtung zum Herstellen eines Presswerkzeugs. Das Presswerkzeug umfasst eine strukturierte Pressoberfläche. Presswerkzeuge z.B. in Form von Pressblechen, Endlosbändern oder Prägewalzen werden z.B. in der holzverarbeitenden Industrie eingesetzt, um z.B. Möbel, Laminate oder Paneele, also allgemein Werkstücke herzustellen. Die Werkstücke werden mit der Pressoberfläche des Presswerkzeugs verpresst, sodass die Werkstücke Oberflächen entsprechend der Pressoberfläche erhalten.

Die WO 2017/081008 A1 offenbart ein Pressblech aus Polyetheretherketon, das eine strukturierte Pressoberfläche mit verschiedenen Glanzgraden aufweist. Das Polyetheretherketon ist mit mindestens 10 bis 50% mit einer Karbonfaser, einem Graphitpulver oder einem wärmeleitenden Material angereichert.

Die WO 2015/024609 A1 offenbart ein Verfahren zur Herstellung einer hydrophoben oder superhydrophoben Oberflächentopographie einer strukturierten Oberfläche eines Pressblechs. Es wird eine abgeformte Oberfläche gescannt, die entsprechenden digitalisierten Daten aus dem Scannen werden mit Tiefenmessung in Graustufen-Bitmaps umgewandelt und die Graustufen-Bitmaps werden zum Steuern einer abrasiven Bearbeitung der Oberfläche des Pressblechs verwendet. Die Verweildauer, Fokussierung und/oder Intensität eines Laserstrahls wird durch die Graustufen-Bitmaps und der ermittelten Tiefe oder Oberflächenvorlage bestimmt.

Die US 2016/144433 A1 betrifft ein Verfahren zum Herstellen eines zum Herstellen eines Werkstücks vorgesehenen Presswerkzeugs, das eine auf einem planen Grundträger aufgebrachte strukturierte Pressoberfläche aufweist, deren Struktur Erhebungen aufweist, aufweisend folgende Verfahrensschritte:
- Bereitstellen einer 2D-Bilddatei, die Bilddaten mit Graustufenwerten aufweist, die einem 2D-Bild einer der strukturierten Pressoberfläche zugeordneten strukturierten Oberfläche zugeordnet sind, und die Graustufenwerte eine Information über Höhen und Verrundungen von Erhebungen der Struktur der strukturierten Oberfläche und somit eine Information über Höhen und Verrundungen von Erhebungen der Struktur der strukturierten Pressoberfläche aufweisen,
- Erzeugen von 2D-Bilddatensätzen aus den Bilddaten der 20-Bilddatei, die aufeinander angeordneten Schichten der strukturierten Pressoberfläche zugeordnet und zum Ansteuern einer Druckervorrichtung vorgesehenen sind, und
- Ansteuern der Druckervorrichtung derart, dass diese in Abhängigkeit der 2D-Bilddatensätze unter Zugabe von Mineralpartikeln Kunststoff- oder Lacktropfen auf einen planen Grundträger druckt, um auf dem planen Grundträger schichtweise übereinanderliegende partielle Kunststoff- oder Lackschichten mit darin eingebetteten Mineralpartikeln zu erhalten, die die strukturierte Pressoberfläche des Presswerkzeugs bilden.

Um die Herstellung der Pressbleche zu rationalisieren und zu vereinfachen wird ein 3D-Drucker verwendet und ein Verfahren angewendet, mit Bereitstellung und Verwendung von digitalisierten Daten einer 3D-Topografie einer Oberflächenstruktur, Erstellen von digitalisierten Daten einzelner 2D-Schichten der 3D-Topografie, Verwendung der digitalisierten Daten der 2D-Schichten, um ein Schichtmaterial mit einem vorhandenen Trägermaterial oder einer bereits fertiggestellten Schicht in Abhängigkeit der digitalisierten Daten der 2D-Schichten zu verbinden.

Die DE 10 2019 127657 A1 betrifft ein Presswerkzeug zum Herstellen eines Werkstücks. Das Presswerkzeug umfasst eine Grundstruktur, eine Pressoberfläche und eine auf der Grundstruktur angeordnete und zumindest teilweise die Pressoberfläche bildende Verschleißschicht, welche während des Herstellens des Werkstücks durch Verpressen mit dem Werkstück in Kontakt steht und in der ein Trennmittel eingebettet ist, welches während des Verpressens ein Anhaften der Verschleißschicht an dem Werkstück zumindest verringert.

Die Aufgabe der Erfindung ist es, ein Verfahren zum Herstellen eines verbessertes Presswerkzeugs mit einer strukturierten Pressoberfläche anzugeben.

Die Aufgabe der Erfindung wird gelöst durch ein Verfahren gemäss Anspruch 1 zum Herstellen eines zum

Herstellen eines Werkstücks vorgesehenen Presswerkzeugs, das eine auf einem planen Grundträger aufgebrachte strukturierte Pressoberfläche aufweist, deren Struktur Erhebungen aufweist, aufweisend folgende Verfahrensschritte:
- Bereitstellen einer 2D-Bilddatei, die Bilddaten mit Graustufenwerten aufweist, die einem 2D-Bild einer der Pressoberfläche zugeordneten strukturierten Oberfläche zugeordnet sind, und die Graustufenwerte eine Information über Höhen und Verrundungen von Erhebungen der Struktur der strukturierten Oberfläche und somit eine Information über Höhen und Verrundungen von Erhebungen der Struktur der strukturierten Pressoberfläche aufweisen,
- Erzeugen von 2D-Bilddatensätzen aus den Bilddaten der 2D-Bilddatei, die aufeinander angeordneten Schichten der strukturierten Pressoberfläche zugeordnet und zum Ansteuern einer Druckervorrichtung vorgesehenen sind, und
- Ansteuern der Druckervorrichtung derart, dass diese in Abhängigkeit der 2D-Bilddatensätze unter Zugabe von Mineralpartikeln Kunststoff- oder Lacktropfen auf einen planen Grundträger druckt, um auf dem planen Grundträger schichtweise übereinanderliegende partielle Kunststoff- oder Lackschichten mit darin eingebetteten Mineralpartikeln zu erhalten, die die strukturierte Pressoberfläche des Presswerkzeugs bilden,
wobei die Bilddaten der 2D-Bilddatensätze Graustufenwerte aufweisen, die der Struktur der entsprechenden Kunststoff- oder Lackschichten zugeordnet sind, und die Größen der einzelnen Kunststoff- oder Lacktropfen von den Graustufenwerten der Bilddaten der 2D-Bilddatensätze abhängen.

Die Erfindung betrifft auch ein Presswerkzeug gemäss Anspruch 8, aufweisend eine strukturierte Pressoberfläche, einen planen Grundträger und mehrere, auf dem planen Grundträger schichtweise übereinander angeordnete Lack- oder Kunststoffschichten mit darin eingebetteten Mineralpartikeln, die die strukturierte Pressoberfläche bilden, wobei die schichtweise übereinander angeordneten Lack- oder Kunststoffschichten aus Kunststoff- oder Lacktropfen bestehen, deren Größe von den Graustufenwerten der Bilddaten der 2D-Bilddatensätze abhängen, und wobei die Graustufenwerte eine Information über Höhen und Verrundungen von Erhebungen der Struktur der strukturierten Oberfläche und somit eine Information über Höhen und Verrundungen von Erhebungen der Struktur der strukturierten Pressoberfläche aufweisen.

Die Erfindung betrifft auch eine Druckervorrichtung gemäss Anspruch 9 zum Herstellen eines Presswerkzeugs, aufweisend
- eine Auflagefläche zum Auflegen eines planen Grundträgers,
- eine oberhalb der Auflagefläche angeordnete Druckerkopfvorrichtung mit wenigstens einer Düse zum Auftragen von Kunstsoff- oder Lacktropfen, und
- eine elektronische Steuervorrichtung, die eingerichtet ist, die Druckerkopfvorrichtung derart anzusteuern, dass diese mittels der wenigstens einen Düse und in Abhängigkeit der 2D-Bilddatensätze unter Zugabe von Mineralpartikeln Kunststoff- oder Lacktropfen auf den planen Grundträger druckt, um auf dem planen Grundträger schichtweise übereinanderliegende partielle Kunststoff- oder Lackschichten mit darin eingebetteten Mineralpartikeln zu erhalten, die die strukturierte Pressoberfläche des Presswerkzeugs bilden,
wobei die Bilddaten der 2D-Bilddatensätze Graustufenwerte aufweisen, die der Struktur der entsprechenden Kunststoff- oder Lackschichten zugeordnet sind, und die elektronische Steuervorrichtung eingerichtet ist, die Druckerkopfvorrichtung derart anzusteuern, dass die Größen der einzelnen Kunststoff- oder Lacktropfen von den Graustufenwerten der Bilddaten der 2D-Bilddatensätze abhängen.

Das Presswerkzeug umfasst den planen Grundträger, der z.B. aus Metall oder Kunststoff besteht. Der plane Grundträger ist vorzugsweise rechteckförmig, sodass dieses Presswerkzeug ähnlich einem Pressblech ausgebildet ist. Der Kunststoff umfasst z.B. Polyetheretherketon.

Die strukturierte Pressoberfläche des Presswerkzeugs umfasst eine Struktur aus den Erhebungen und ist vorgesehen, zum Herstellen des Werkstücks mit diesem verpresst zu werden. Dadurch erhält das mit dem Presswerkzeug hergestellte Werkstück eine strukturierte Oberfläche entsprechend der Struktur der Pressoberfläche.

Das Werkstück ist z.B. eine Werkstoffplatte. Diese umfasst z.B. einen Träger, z.B. eine MDF-Platte oder eine Spanplatte, die mit einem Harz oder Kunststoff beschichteten Träger (z.B. Papier) mittels des Presswerkzeugs verpresst wird. Die Werkstoffplatte kann auch eine sogenannte Luxuriöse Vinylfliese (LVT) sein.

Das erfindungsgemäße Presswerkzeug wird mittels Druckens bzw. mittels einer Druckervorrichtung hergestellt und umfasst die mehreren, übereinander angeordneten Kunststoff- oder Lackschichten. Die Druckervorrichtung ist somit ausgebildet, schichtweise die Kunststoff- oder Lackschichten aufeinander zu drucken, wodurch das Presswerkzeug mit seiner strukturierten Pressoberfläche entsteht. Die Kunststoffschichten umfassen z.B. Polyetheretherketon oder bestehen z.B. aus Polyetheretherketon. Durch die Verwendung der Druckervorrichtung kann das erfindungsgemäße Presswerkzeug relativ einfach relativ umweltverträglich hergestellt werden, da z.B. keine umweltbelastenden Chemikalien für ein Ätzen benötigt werden. Das Drucken ermöglicht außerdem eine relativ konstante Reproduzierbarkeit mit einer relativ geringen Toleranz der Einzelschritte.

Da die Kunststoff- oder Lackschichten die strukturierte Pressoberfläche bilden, sind diese partielle Kunststoff- oder Lackschichten.

Während der Herstellung des Werkstücks steht die strukturierte Pressoberfläche mit dem Werkstück in Kontakt und ist daher einem Verschleiß ausgesetzt. Um den Verschleiß zu reduzieren, sollte daher die strukturierte Pressoberfläche relativ verschleißfest sein. Um die Verschleißfestigkeit der strukturierten Pressoberfläche bzw. des erfindungsgemäßen Presswerkzeugs zu erhöhen, sind in den Kunststoff-oder Lackschichten die Mineralpartikel eingebettet.

Minerale sind insbesondere in der Erdkruste vorkommende, meist anorganische, homogene, meist kristallisierte Substanzen. Die Mehrzahl der heute bekannten und von der International Mineralogical Association als eigenständig anerkannten Minerale sind anorganisch.

Die Mineralpartikel weisen insbesondere eine Mohshärte von wenigstens 8 auf. Die Mineralpartikel können eine Größe im Nanometer oder Mikrometerbereich aufweisen. Dadurch können die Mineralpartikel relativ homogen in den Kunststoff- oder Lackschichten eingebettet werden, wodurch die strukturierte Pressoberfläche eine relativ homogene Härte über ihre gesamte Oberfläche erhalten kann. Die Größe der einzelnen Mineralpartikel kann unterschiedlich oder im Wesentlichen gleich sein.

Die Mineralpartikel weisen vorzugsweise einen Volumenanteil von wenigstens 50% bezogen auf das Volumen der Kunststoff- oder Lackschicht mit darin eingebetteten Mineralpartikeln auf. Aufgrund der Größe, des Volumenanteils und der Art der Minerale der Mineralpartikel kann der gewünschte Verschleißgrad der strukturierten Pressoberfläche eingestellt werden.

Die Mineralpartikel sind vorzugsweise Diamantpartikel bzw. Industriediamantpartikel. Jedoch sind insbesondere die Minerale Siliziumcarbid, Bornnitrid, Borcarbid, Aluminiumoxid und Titanoxid als Mineralpartikel auch verwendbar.

Die Mineralpartikel sind z.B. als Mineralpulver, insbesondere als Diamantpulver und vorzugsweise als Industriediamantpulver ausgebildet.

Die strukturierte Pressoberfläche ist insbesondere einem natürlichen Werkstoff, wie z.B. Holz oder Stein zugeordnet.

Zum Ansteuern der Druckervorrichtung sind die 2D-Bilddatansätze vorgesehen, die aus der bereitgestellten 2D-Bilddatei erzeugt werden. Die Bilddaten der 2D-Bilddatei weisen Graustufenwerte auf, die einem 2D-Bild der der strukturierten Pressoberfläche zugeordneten strukturierten Oberfläche zugeordnet sind. Das 2D-Bild ist demnach ebenfalls ein Bild der strukturierten Oberfläche, deren Struktur unterschiedlich grau dargestellt ist, bzw. das 2D-Bild ist demnach ebenfalls de strukturierten Pressoberfläche zugeordnet.

Die strukturierte Oberfläche umfasst Erhebungen mit Höhen und Verrundungen und die Graustufenwerte der Bilddaten umfassen die Information über die Höhen und Verrundungen der Erhebungen der Struktur der strukturierten Oberfläche. Da die strukturierte Oberfläche der strukturierten Pressoberfläche zugeordnet ist, umfassen die Graustufenwerte der Bilddaten auch eine Information über die Höhen und Verrundungen der Erhebungen der Struktur der strukturierten Pressoberfläche.

Dadurch ist es möglich, dass die Erhebungen der strukturierten Pressoberfläche entsprechend dieser Information insbesondere mittels der Druckervorrichtung hergestellt werden.

Damit die Druckervorrichtung die einzelnen Kunststoff- oder Lackschichten schichtweise zu drucken vermag, werden die 2D-Bilddatensätze aus den Bilddaten der 2D-Bilddatei erzeugt. Die 2D-Bilddatensätze sind den aufeinander angeordneten Kunststoff- oder Lackschichten der strukturierten Pressoberfläche zugeordnet und sind zum Ansteuern der Druckervorrichtung vorgesehenen.

Da für das Erzeugen der 2D-Bilddatensätze die Bilddaten mit den Graustufenwerten verwendet werden, können diese bzw. das entsprechende Bild relativ einfach manuell oder auch automatisch vorab z.B. am Computer verändert werden, um die Eigenschaften der Struktur der strukturierten Pressoberfläche zu modifizieren bzw. an bestimmte Vorgaben anzupassen. Graustufenwerte werden bisweilen auch als Grauwerte oder Halbtondaten bezeichnet.

Somit ist es möglich, die Druckervorrichtung derart anzusteuern, dass diese in Abhängigkeit der 2D-Bilddatensätze und unter Zugabe von Mineralpartikeln Kunststoff- oder Lacktropfen auf den planen Grundträger druckt, um auf dem planen Grundträger schichtweise die übereinanderliegenden partiellen Kunststoff- oder Lackschichten mit darin eingebetteten Mineralpartikeln zu erhalten, die die strukturierte Pressoberfläche des Presswerkzeugs bilden.

Um die Struktur der Pressoberfläche verbessert, insbesondere feiner zu drucken, ist es vorgesehen, dass die Bilddaten der 2D-Bilddatensätze Graustufenwerte aufweisen, die der Struktur der entsprechenden Kunststoff- oder Lackschichten zugeordnet sind, und die Größen der einzelnen Kunststoff- oder Lacktropfen von den Graustufenwerten der Bilddaten der 2D-Bilddatensätze abhängen. Die elektronische Steuervorrichtung der erfindungsgemäßen Druckervorrichtung ist somit eingerichtet, die Druckerkopfvorrichtung derart anzusteuern, dass die Größen der einzelnen Kunststoff-oder Lacktropfen von den Graustufenwerte der Bilddaten der 2D-Bilddatensätze abhängen. Durch die unterschiedlichen Größen der Kunststoff- bzw. Lacktropfen können insbesondere die Ränder bzw. die Verrundungen der Erhebungen der strukturierten Pressoberfläche besser bzw. feiner gedruckt werden. Insbesondere ist es möglich, die Bereiche der einzelnen Kunststoff- oder Lackschichten, die den Erhebungen zugeordnet sind, bereichsweise mit unterschiedlich großen Kunststoff-oder Lacktropfen zu bedrucken. Innerhalb der Erhebungen kann aufgrund der Graustufenwerte die entsprechende Kunststoff- oder Lackschicht mit einer größeren Größe, vorzugsweise mit der maximalen Größe der Kunststoff- oder Lacktropfen bedruckt werden, und an den Rändern der Erhebungen entsprechend der Graustufenwerte mit geringerer Größe der Kunststoff- oder Lacktropfen, um die Verrundungen der Erhebungen besser zu drucken.

Die 2D-Bilddatei und gegebenenfalls die 2D-Bilddatensätze zum Ansteuern der Druckervorrichtung umfassen insbesondere einzelne Bildpunkte in einer vorgegebenen Auflösung. Je höher die Auflösung, je genauer und feiner ist die Darstellung und Abstufung. Den Bildpunkten sind insbesondere Graustufenwerte von 0 - 100 % zugeordnet.

Insbesondere kann es auch vorgesehen sein, dass der Volumenanteil der Mineralpartikel der einzelnen Kunststoff- oder Lacktropfen von den Graustufenwerten der Bilddaten der 2D-Bilddatensätze abhängt. Dadurch ist es möglich, den Verschleißgrad der Pressoberfläche lokal in Abhängigkeit der Graustufenwerte einzustellen.

Die mit dem Presswerkzeug hergestellten Werkstoffplatten weisen eine Struktur entsprechend der strukturierten Pressoberfläche auf. Die Struktur der Werkstoffplatten weist dementsprechend Tiefen entsprechend der Erhebungen der strukturierten Pressoberfläche auf. Die maximale Tiefe der strukturierten Oberfläche der Werkstoffplatten bzw. die maximale Höhe der Erhebungen der strukturierten Pressoberfläche beträgt vorzugsweise höchstens 500 µm, insbesondere höchstens 200 µm.

Um die Anzahl der Kunststoff- oder Lackschichten und dementsprechend die Anzahl der 2D-Bilddatensätze zu erhalten, ist es gemäß einer Variante des erfindungsgemäßen Verfahrens vorgesehen, die Anzahl der 2D-Bilddatensätzen in Abhängigkeit der von der verwendeten Druckervorrichtung erzeugten Schichtdicken der Kunststoff- oder Lackschichten und in Abhängigkeit einer vorgegebenen maximalen Höhe der Erhebungen der Struktur der Pressoberfläche zu ermitteln. Aufgrund der Verwendung der Druckervorrichtung ist es somit in relativ einfacher Weise möglich, Presswerkzeuge mit einer strukturierten Pressoberfläche herzustellen, deren maximale Höhe der Erhebungen sich unterscheiden.

Die 2D-Bilddatei kann z.B. erzeugt werden, indem das erfindungsgemäße Verfahren ein Scannen einer strukturierten Vorlage umfasst, um eine 3D-Bilddatei, die einem 3D-Bild der strukturierten Vorlage zugeordnet ist, zu erhalten. Die 2D-Bilddatei kann dann au aus der 3D-Bilddatei erzeugt werden.

Die strukturierte Pressoberfläche ist insbesondere einem natürlichen Werkstoff, wie z.B. Holz oder Stein, zugeordnet. Um die Struktur der Pressoberfläche zu erhalten, kann es vorgesehen sein, dass die eben genannte strukturierte Vorlage, z.B. ein Stück Holz oder ein Stein, gescannt wird, um die 3D-Bilddatei zu erhalten. Aufgrund des Scannens kann somit z.B. ein der strukturierten Pressoberfläche zugeordneter 3D-Bilddensatz entstehen, aus dem die 2D-Bilddatei erzeugt wird.

Die Kunststoff- oder Lackschichten können nachbehandelt werden, indem sie z.B. durch eine UV-Bestrahlung und/oder mittels eines Elektronenstrahl- oder Laserhärten gehärtet werden.

Es ist auch möglich, dass zumindest zwei der Kunststoff- oder Lackschichten unterschiedliche Glanzgrade aufweisen, wodurch die strukturierte Pressoberfläche Bereiche unterschiedlicher Glanzgrade erhält bzw. umfasst. Dadurch erhält die strukturierte Oberfläche des mit dem Presswerkzeug hergestellten Werkstücks ebenfalls Bereiche unterschiedlicher Glanzgrade.

Die unterschiedlichen Glanzgrade können z.B. durch ein Nachbehandeln der Kunststoff- oder Lackschichten eingestellt werden, wie z.B. die eben genannte UV-Bestrahlung oder das Elektronenstrahl- oder Laserhärten. Die unterschiedlichen Glanzgrade können auch eingestellt werden, indem die Kunststoff- oder Lackschichten mit unterschiedlichen Temperaturen nachbehandelt werden.

Um die unterschiedlichen Größen der Kunststoff- oder Lacktropfen zu erhalten, kann gemäß einer Variante der erfindungsgemäßen Druckervorrichtung deren Druckerkopfvorrichtung mehrere Düsen aufweist, deren Querschnitte sich unterscheiden, sodass sich die Größen der Kunstsoff- oder Lacktropfen je nach verwendeter Düse unterscheiden. Je nach mittels der elektronischen Steuervorrichtung angesteuerter Düse wird ein Kunststoff- oder Lacktropfen gewünschter Größe gedruckt.

Die Düsen unterschiedlicher Querschnitte können z.B. nebeneinander angeordnet sein. So können insbesondere mehr als zwei Düsen unterschiedlicher Querschnitte vorgesehen sein, deren Querschnitte nacheinander größer oder kleiner sind.

Die Düsen können z.B. längs oder quer zu einer Bewegungsrichtung der Druckerkopfvorrichtung angeordnet sein.

Die Düsen können auch nebeneinander und hintereinander, insbesondere matrixförmig angeordnet sein, sodass insbesondere die Druckerkopfvorrichtung bezüglich ihrer Bewegungsrichtung mehrere nebeneinander und mehrere hintereinander angeordnete Düsen umfasst.

Insbesondere kann es vorgesehen sein, dass die nebeneinander angeordneten Düsen gleiche Querschnitte aufweisen und sich die Querschnitte der hintereinander angeordneten Düsen unterscheiden.

Insbesondere kann es vorgesehen sein, dass die hintereinander angeordneten Düsen gleiche Querschnitte aufweisen und sich die Querschnitte der nebeneinander angeordneten Düsen unterscheiden.

Ausführungsbeispiele der Erfindung sind exemplarisch in den beigefügten schematischen Figuren dargestellt. Es zeigen:
- Fig. 1: ein Presswerkzeug mit einer strukturierten Pressoberfläche aus Erhebungen in einer perspektivischen Darstellung,
- Figuren 2a - c: Querschnitte von Erhebungen der strukturierten Pressoberfläche,
- Fig. 3: ein Längsschnitt einer Erhebung der strukturierten Pressoberfläche,
- Figuren 4a - c: Querschnitte der Erhebung der Fig. 3,
- Fig. 5: eine Seitenansicht des Presswerkzeugs in geschnittener Darstellung,
- Fig. 6: eine Druckervorrichtung,
- Fig. 7: ein der strukturierten Pressoberfläche zugeordnetes Bild,
- Fig. 8: ein Graustufenwerte veranschaulichendes Diagramm, und
- Figuren 9 -11: unterschiedliche Druckerkopfvorrichtungen der Druckervorrichtung der Fig. 6.

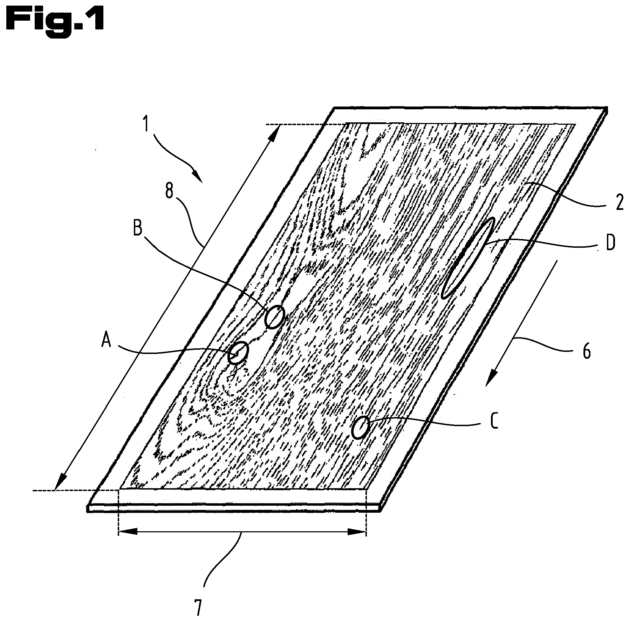

Die Fig. 1 zeigt in einer perspektivischen Darstellung ein Presswerkzeug 1 mit einer strukturierten Pressoberfläche 2, die eine Struktur aus Vertiefungen 3 und Erhebungen 4 aufweist. Die strukturierte Pressoberfläche 2 ist z.B. einer Holzmaserung zugeordnet.

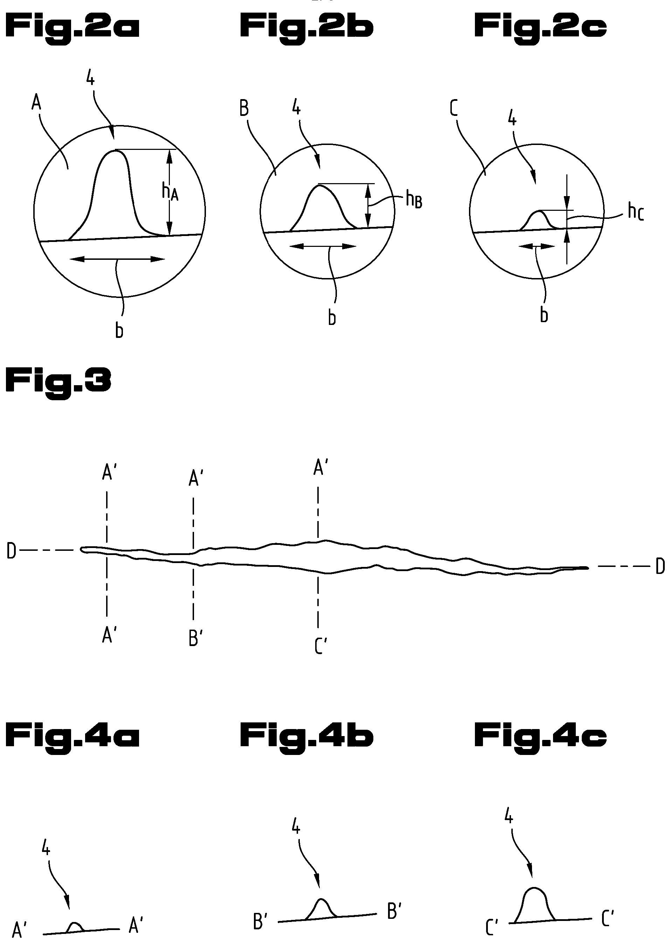

Die Figuren 2a bis 2c zeigen Querschnitte einiger der Erhebungen 4 der strukturierten Pressoberfläche 2.

Die Fig. 3 zeigt einen Längsschnitt einer der Erhebungen 4 und die Figuren 4a bis 4c zeigen Querschnitte der in der Fig. 3 gezeigten Erhebung 4 längs ihrer Längsausdehnung.

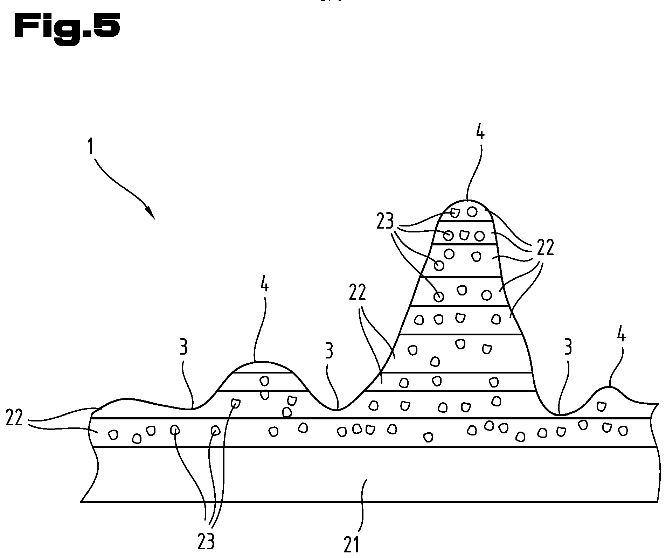

Die Fig. 5 zeigt eine Seitenansicht des Presswerkzeugs 1 in geschnittener Darstellung.

Mit dem Presswerkzeug 1 kann ein Werkstück, z.B. eine Werkstoffplatte, beispielsweise ein Laminat, durch Verpressen hergestellt werden. Nach dem Verpressen weist das Werkstück eine der Struktur der strukturierten Pressoberfläche 2 entsprechend strukturierte Oberfläche auf.

Das Presswerkzeug 1 umfasst einen planen Grundträger 21 und mehrere, übereinander angeordnete bzw. schichtweise überlagerte Kunststoff- oder Lackschichten 22, in denen jeweils Mineralpartikel 23 eingebettet sind und die auf dem Grundträger 21 angeordnet sind. Die Kunststoff- oder Lackschichten 22 mit darin eingebetteten Mineralpartikel 23 bilden die strukturierte Pressoberfläche 2. Der plane Grundträger 21 ist z.B. aus Metall, z.B. Stahl, oder aus Kunststoff und ist insbesondere rechteckig.

Im Falle des vorliegenden Ausführungsbeispiels ist die Pressoberfläche 2 rechteckig und weist eine Querausdehnung 7 und eine Längsausdehnung 8 auf. Außerdem erstreckt sich die Struktur der strukturierten Pressoberfläche 2 entlang einer Vorzugsrichtung 6, die im Falle des vorliegenden Ausführungsbeispiels entlang der Längsausdehnung 8 verläuft.

Die Mineralpartikel 23 weisen insbesondere eine Mohshärte von wenigstens 8 und eine Größe im Nanometer oder Mikrometerbereich auf. Der Volumenanteil der Mineralpartikel 23 ist vorzugsweise wenigstens 50% bezogen auf das Volumen der Kunststoff- oder Lackschichten 22 mit darin eingebetteten Mineralpartikeln 23.

Im Falle des vorliegenden Ausführungsbeispiels sind die Mineralpartikel 23 Industriediamantpartikel.

Die strukturierte Pressoberfläche 2 umfasst die Erhebungen 4, die jeweils eine Höhe h aufweisen. In den Figuren 2a bis 2c sind in geschnittener Darstellung ein paar dieser Erhebungen 4 dargestellt, wobei die Erhebung mit der maximale Höhe *hₘₐₓ* mit 100% ausgewiesen ist. Die Erhebungen 4 haben jeweils auch unterschiedliche Breiten b und Verrundungen.

Die maximale Höhe *hₘₐₓ* der Erhebungen 4 der strukturierten Pressoberfläche 2 beträgt vorzugsweise maximal 500 µm, insbesondere maximal 200 µm.

Die in der Fig. 2a gezeigte Erhebung 4 weist im Falle des vorliegenden Ausführungsbeispiels eine Höhe *h_{A}* auf, welche im Falle des vorliegenden Ausführungsbeispiels gleich der maximale Höhe *hₘₐₓ* ist. Die in der Fig. 2b gezeigte Erhebung 4 weist im Falle des vorliegenden Ausführungsbeispiels eine Höhe *h_{B}* entsprechend 60% bezogen auf die maximale Höhe und die in der Fig. 2c gezeigte Erhebung 4 weist im Falle des vorliegenden Ausführungsbeispiels eine Höhe *h_{C}* entsprechend 20% bezogen auf die maximale Höhe auf.

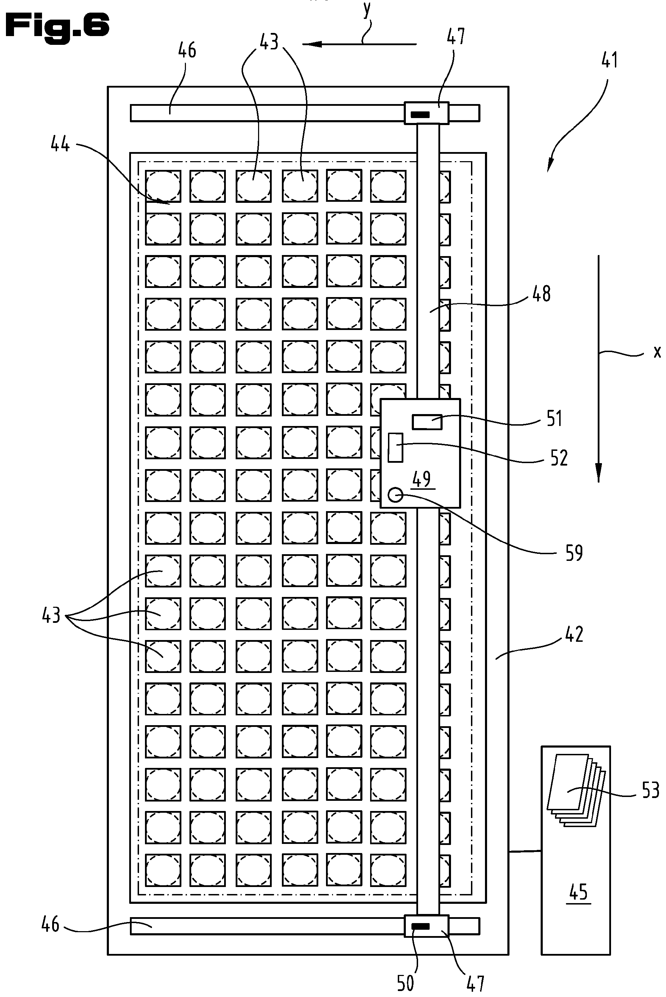

Das Presswerkzeug 1 wurde z.B. mit einer in der Fig. 6 als Draufsicht dargestellten Druckervorrichtung 41 hergestellt. Diese umfasst im Falle des vorliegenden Ausführungsbeispiels einen Auflagetisch 42, der eine aus mehreren einzelnen Planflächen 43 hergestellte Auflagefläche 44 aufweist. Für die Herstellung des Presswerkzeugs 1 wird zunächst der Grundträger 21 derart auf der Auflagefläche 42 abgelegt, dass dessen Seite, auf der die Pressoberfläche 2 aufgebaut werden soll, der Auflagefläche 44 abgewandt ist.

Die Auflagefläche 44 ist insbesondere rechteckig und weist eine den Abmessungen des Presswerkzeugs 1 angepasste Abmessung auf.

Die Druckervorrichtung 41 umfasst im Falle des vorliegenden Ausführungsbeispiels eine elektronische Steuervorrichtung 45, welche den Betrieb der Druckervorrichtung 41 steuert.

Im Falle des vorliegenden Ausführungsbeispiels sind in den Planflächen 43 Ansaugöffnungen ausgebildet, die mittels einer nicht dargestellten und von der elektronischen Steuervorrichtung 45 angesteuerten Vakuumpumpe der Druckervorrichtung 41 das Presswerkzeug 1 bzw. den Grundträger 21 auf die Planflächen 43 zieht, wodurch das Presswerkzeug 1 bzw. dessen Grundträger 21 auf der Auflagefläche 44 fixiert ist.

Im Falle des vorliegenden Ausführungsbeispiels umfasst die Druckervorrichtung 41 Führungsschienen 46, die in Querrichtung der Auflagefläche 44 und neben der Auflagefläche 44 angeordnet sind.

Die Druckervorrichtung 41 umfasst insbesondere Gleitführungen 47, die längs der Führungsschienen 46 verfahrbar gelagert sind.

Die Druckervorrichtung 41 umfasst eine insbesondere längs zur Auflagefläche 44 ausgerichtete Längsschiene 48, welche an ihren Enden jeweils mit den Gleitführungen 47 verbunden sind.

Die Druckervorrichtung 41 umfasst ferner eine Druckerkopfvorrichtung 49, welche längs der Längsschiene 48 verschieblich gelagert ist.

Die Druckerkopfvorrichtung 49 umfasst wenigstens eine Düse 59, mit der die Druckerkopfvorrichtung 49 Kunststoff- oder Lacktropfen unter Zugabe der Mineralpartikeln 23 aufzutragen vermag, um die Kunststoff- oder Lackschichten 22 mit den eingebetteten Mineralpartikeln 23 zu drucken.

Im Falle des vorliegenden Ausführungsbeispiels umfasst die Druckervorrichtung 41 einen elektrischen Antrieb 50, der eingerichtet ist, gesteuert durch die elektronische Steuervorrichtung 45, die Gleitführungen 47 und somit die Längsschiene 48 bzw. die Druckerkopfvorrichtung 49 längs der Führungsschienen 46 und somit in Querrichtung y der Auflagefläche 44 zu bewegen.

Im Falle des vorliegenden Ausführungsbeispiels umfasst die Druckervorrichtung 41 einen weiteren elektrischen Antrieb 51, der eingerichtet ist, gesteuert durch die elektronische Steuervorrichtung 45, die Druckerkopfvorrichtung 49 längs der Längsschienen 48 und somit längs zur Auflagefläche 44, d.h. in Längsrichtung x zu bewegen.

Somit ist es möglich, die Druckerkopfvorrichtung 49 in einer Ebene parallel zur Auflagefläche 44 bzw. parallel zur herzustellenden Pressoberfläche 2 zu verfahren.

Im Falle des vorliegenden Ausführungsbeispiels umfasst die Druckervorrichtung 41 einen weiteren elektrischen Antrieb 52, der eingerichtet ist, gesteuert durch die elektronische Steuervorrichtung 45, die Druckerkopfvorrichtung 49 rechtwinklig zur Auflagefläche 44 und somit rechtwinklig zur herzustellenden Pressoberfläche 2 zu bewegen.

Die Druckervorrichtung 41 ist derart ausgebildet, dass das auf der Auflagefläche 44 fixierte Presswerkzeug 1 bzw. dessen Grundträger 21 zwischen der Auflagefläche 44 und der Druckerkopfvorrichtung 49 angeordnet ist.

Somit ist es möglich, gesteuert durch die elektronische Steuervorrichtung 45, die Druckerkopfvorrichtung 49 an die gewünschte Position relativ zum Grundträger 21 zu bewegen. Insbesondere ist es vorgesehen, dass die Druckerkopfvorrichtung 49 derart in der Richtung rechtwinklig zur Pressoberfläche 2 mittels des elektrischen Antriebs 52 bewegt wird, dass der Abstand zwischen der aktuell gedruckten Kunststoff- oder Lackschicht 22 und der Druckerkopfvorrichtung 49 konstant gehalten wird. Die elektronische Steuervorrichtung 45 ist vorzugsweise derart ausgebildet, dass sie den weiteren elektrischen Antrieb 52 derart regelt, dass der Abstand zwischen der aktuell gedruckten Kunststoff- oder Lackschicht 22 und der Düsen 59 bzw. der Druckerkopfvorrichtung 49 konstant bleibt.

Zum Ansteuern der Druckervorrichtung 41 sind 2D-Bilddatansätze 53 vorgesehen, die den einzelnen Kunststoff- oder Lackschichten 22 zugeordnet sind.

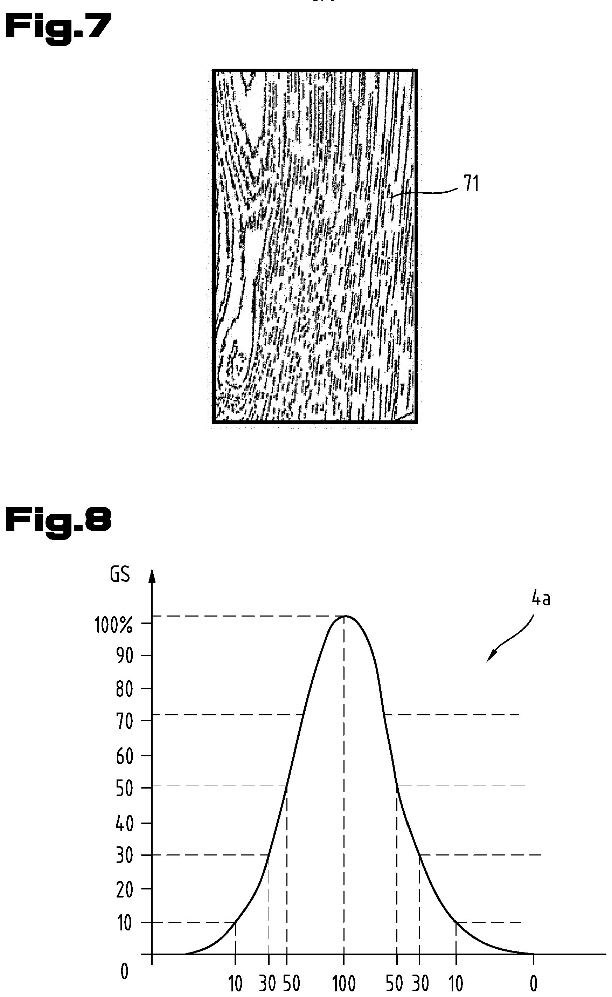

Die 2D-Bilddatensätze 53 werden aus Bilddaten einer 2D-Bilddatei erzeugt. Die Bilddaten weisen Graustufenwerte auf und sind einem in der Fig. 7 gezeigten 2D-Bild 71 zugeordnet. Das 2D-Bild 71 ist ein Bild einer strukturierten Oberfläche. Die strukturierte Oberfläche bzw. die Bilddaten der 2D-Bilddatei sind der Pressoberfläche 2 zugeordnet und die Graustufenwerte der Bilddaten umfassen eine Information über die Höhen und Verrundungen von Erhebungen der Struktur der strukturierten Oberfläche und somit über die Erhebungen 4 und Verrundungen der Pressoberfläche 2.

Das 2D-Bild 71 ist ein Bild der strukturierten Oberfläche und, da die zugeordneten Bilddaten Grauwertstufen aufweisen, gibt das 2D-Bild 71 die strukturierte Oberfläche ebenfalls mit Grauwertstufen wieder.

Die Fig. 8 zeigt schematisch eine Erhebung 4a der strukturierten Oberfläche bzw. entsprechende Grauwertstufen GS dieser Erhebung 4a, die die Information über die Höhe und Verrundungen dieser Erhebung 4a und somit auch über die Höhe und Verrundungen der entsprechende Erhebung 4 der strukturierten Pressoberfläche 2 umfasst. Die in der Fig. 8 gezeigte Erhebung 4a hat eine Höhe entsprechend von 100% bezogen auf die maximale Höhe.

Die Bilddaten der 2D-Bilddatensätze 53 weisen Graustufenwerte auf, die der Struktur der entsprechenden Kunststoff- oder Lackschichten 22 zugeordnet sind. Außerdem hängen die Größen der einzelnen Kunststoff- oder Lacktropfen von den Graustufenwerten der Bilddaten der 2D-Bilddatensätze 53 ab, sodass die elektronische Steuervorrichtung 45 der Druckervorrichtung 41 eingerichtet ist, die Druckerkopfvorrichtung 49 derart anzusteuern, dass die Größen der einzelnen Kunststoff- oder Lacktropfen von den Graustufenwerte der Bilddaten der 2D-Bilddatensätze 53 abhängen.

Insbesondere kann es vorgesehen sein, dass die Graustufenwerte der Bilddaten der 2D-Bilddatensätze 53 einer maximalen Größe der Kunstsoff- oder Lacktropfen zugeordnet sind, wenn diese Kunstsoff- oder Lacktropfen dem Inneren einer Erhebung 4 zugeordnet sind. An den Rändern der Erhebungen sind die Graustufenwerte der Bilddaten der 2D-Bilddatensätze 53 entsprechend der Verrundungen Größen kleiner als den maximalen Größen der Kunstsoff- oder Lacktropfen zugeordnet.

Insbesondere kann es auch vorgesehen sein, dass der Volumenanteil der Mineralpartikel 23 der einzelnen Kunststoff- oder Lacktropfen von den Graustufenwerten der Bilddaten der 2D-Bilddatensätze 53 abhängt.

Um die Anzahl der Kunststoff- oder Lackschichten 22 und dementsprechend die Anzahl der 2D-Bilddatensätze 53 zu erhalten, ist es im Falle des vorliegenden Ausführungsbeispiels vorgesehen, die Anzahl der 2D-Bilddatensätzen 53 in Abhängigkeit der von der verwendeten Druckervorrichtung 41 erzeugten Schichtdicken der Kunststoff- oder Lackschichten 22 und in Abhängigkeit einer vorgegebenen maximalen Höhe *hₘₐₓ* der Erhebungen 4 der Struktur der Pressoberfläche 2 zu ermitteln.

Die Kunststoff- oder Lackschichten 22 können nachbehandelt werden, indem sie z.B. durch eine UV-Bestrahlung und/oder mittels ein Elektronenstrahl- oder Laserhärten gehärtet werden.

Im Falle des vorliegenden Ausführungsbeispiels weisen zumindest zwei der Kunststoff- oder Lackschichten 22 unterschiedliche Glanzgrade auf, wodurch die strukturierte Pressoberfläche 2 Bereiche unterschiedlicher Glanzgrade erhält bzw. umfasst. Dadurch erhält die Oberfläche des mit dem Presswerkzeug 1 hergestellten Werkstücks ebenfalls Bereiche unterschiedlicher Glanzgrade.

Die unterschiedlichen Glanzgrade können z.B. durch ein Nachbehandeln der Kunststoff- oder Lackschichten 22 eingestellt werden, wie z.B. die eben genannte UV-Bestrahlung oder das Elektronenstrahl- oder Laserhärten. Die unterschiedlichen Glanzgrade können auch eingestellt werden, indem die Kunststoff- oder Lackschichten mit unterschiedlichen Temperaturen nachbehandelt werden.

Um die unterschiedlichen Größen der Kunststoff- oder Lacktropfen zu erhalten, kann die Druckerkopfvorrichtung 49 mehrere Düsen 59 aufweisen, deren Querschnitte sich unterscheiden, sodass sich die Größen der Kunstsoff- oder Lacktropfen je nach verwendeter Düse 59 unterscheiden. Je nach mittels der elektronischen Steuervorrichtung 45 angesteuerter Düse wird ein Kunststoff- oder Lacktropfen gewünschter Größe gedruckt.

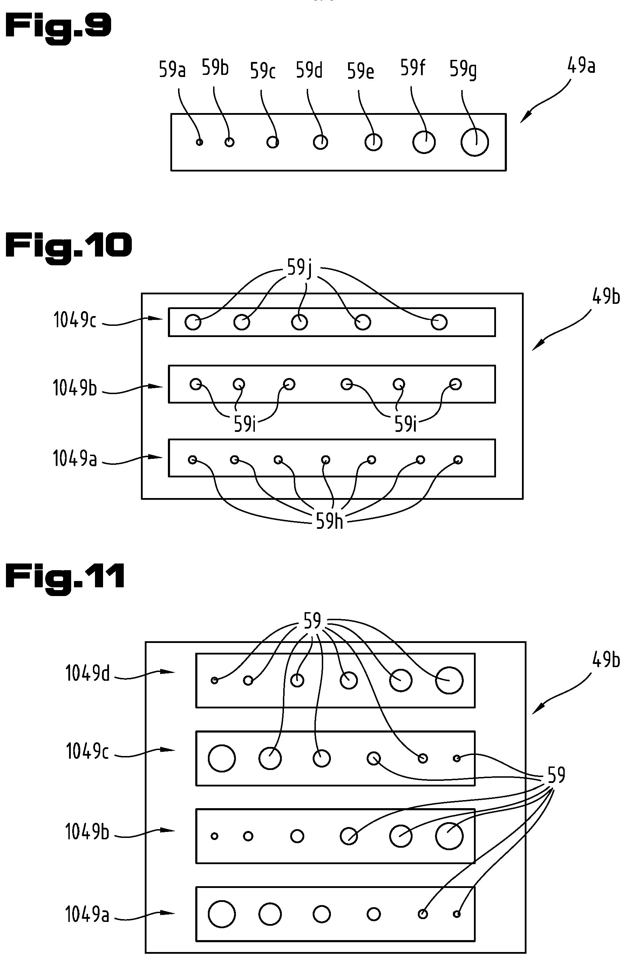

Verschiedene Ausführungsformen der Druckerkopfvorrichtung 49 sind in den Figuren 9 bis 11 gezeigt.

Die Düsen 59 unterschiedlicher Querschnitte können z.B. nebeneinander angeordnet sein. So können insbesondere mehr als zwei Düsen 59 unterschiedlicher Querschnitte vorgesehen sein, deren Querschnitte nacheinander größer oder kleiner sind.

Die Düsen 59 können z.B. längs oder quer zu einer Bewegungsrichtung der Druckerkopfvorrichtung 49 angeordnet sein. Eine solche erste Ausführungsform einer Druckerkopfvorrichtung ist in der Fig. 9 gezeigt und mit dem Bezugszeichen 49a versehen. Diese Druckerkopfvorrichtung 49a umfasst z.B. eine erste Düse 59a, eine zweite Düse 59b, eine dritte Düse 59c, eine vierte Düse 59d, eine fünfte Düse 59e, eine sechste Düse 59f und eine siebte Düse 59g. Die erste Düse 59a hat z.B. einen Durchmesser von 10µm, die zweite Düse 59b hat z.B. einen Durchmesser von 20µm, die dritte Düse 59c hat z.B. einen Durchmesser von 30µm, die vierte Düse 59d hat z.B. einen Durchmesser von 40µm, die fünfte Düse 59e hat z.B. einen Durchmesser von 50µm, die sechste Düse 59f hat z.B. einen Durchmesser von 60µm und die siebte Düse 59g hat z.B. einen Durchmesser von 70µm.

Die Düsen 59 können auch nebeneinander und hintereinander, insbesondere matrixförmig angeordnet sein, sodass insbesondere die Druckerkopfvorrichtung 49 bezüglich ihrer Bewegungsrichtung mehrere nebeneinander und mehreren hintereinander angeordnete Düsen 59 umfasst.

Insbesondere kann es vorgesehen sein, dass die hintereinander angeordneten Düsen 59 gleiche Querschnitte aufweisen und sich die Querschnitte der nebeneinander angeordneten Düsen 59 unterscheiden, oder dass die nebeneinander angeordneten Düsen 59 gleiche Querschnitte aufweisen und sich die Querschnitte der hintereinander angeordneten Düsen 59 unterscheiden.

Die Fig. 10 zeigt eine zweite Ausführungsform einer Druckerkopfvorrichtung, die mehrere nebeneinander und mehrere hintereinander angeordnete Düsen umfasst. Die zweite Ausführungsform der Druckerkopfvorrichtung ist mit dem Bezugszeichen 49b versehen und umfasst insbesondere mehrere hintereinander angeordnete Druckerköpfe, im Falle des vorliegenden Ausführungsbeispiels einen ersten Druckerkopf 1049a, einen zweiten Druckerkopf 1049b und einen dritten Druckerkopf 149c, die jeweils mehrere, nebeneinander angeordnete Düsen umfassen. Insbesondere weisen die Düsen 59h des ersten Druckerkopfs 1049a jeweils einen Durchmesser von 10µm, die Düsen 59i des Durchmesser Druckerkopfs 1049b jeweils einen Querschnitt von 20µm und die Düsen 59j des dritten Druckerkopfs 1049b jeweils einen Durchmesser von 30µm auf.

Die Fig. 11 zeigt eine dritte Ausführungsform einer Druckerkopfvorrichtung, die mehrere nebeneinander und mehrere hintereinander angeordnete Düsen 59 umfasst. Die dritte Ausführungsform der Druckerkopfvorrichtung ist mit dem Bezugszeichen 49c versehen und umfasst insbesondere mehrere hintereinander angeordnete Druckerköpfe, im Falle des vorliegenden Ausführungsbeispiels einen ersten Druckerkopf 1149a, einen zweiten Druckerkopf 1149b, einen dritten Druckerkopf 1149c und einen vierten Druckerkopf 1149d, die jeweils mehrere, nebeneinander angeordnete Düsen 59 umfassen. Insbesondere sind die Querschnitte der Düsen 59 des ersten und des dritten Druckerkopfes 1149a, 1149c derart, dass sich ihre Querschnitte von links nach rechts verkleinern, und die Querschnitte der Düsen 59 des zweiten und des vierten Druckerkopfes 1149b, 1149d sind derart, dass sich ihre Querschnitte von links nach rechts vergrößern.

## Patentansprüche

1. Verfahren zum Herstellen eines zum Herstellen eines Werkstücks vorgesehenen Presswerkzeugs (1), das eine auf einem planen Grundträger (21) aufgebrachte strukturierte Pressoberfläche (2) aufweist, deren Struktur Erhebungen (4) aufweist, aufweisend folgende Verfahrensschritte:
- Bereitstellen einer 2D-Bilddatei, die Bilddaten mit Graustufenwerten aufweist, die einem 2D-Bild (71) einer der strukturierten Pressoberfläche (2) zugeordneten strukturierten Oberfläche zugeordnet sind, und die Graustufenwerte eine Information über Höhen und Verrundungen von Erhebungen (4a) der Struktur der strukturierten Oberfläche und somit eine Information über Höhen und Verrundungen von Erhebungen (4) der Struktur der strukturierten Pressoberfläche (2) aufweisen,
- Erzeugen von 2D-Bilddatensätzen (53) aus den Bilddaten der 2D-Bilddatei, die aufeinander angeordneten Schichten der strukturierten Pressoberfläche (2) zugeordnet und zum Ansteuern einer Druckervorrichtung (41) vorgesehen sind, und
- Ansteuern der Druckervorrichtung (41) derart, dass diese in Abhängigkeit der 2D-Bilddatensätze (53) unter Zugabe von Mineralpartikeln (23) Kunststoff- oder Lacktropfen auf einen planen Grundträger (21) druckt, um auf dem planen Grundträger (21) schichtweise übereinanderliegende partielle Kunststoff- oder Lackschichten (22) mit darin eingebetteten Mineralpartikeln (23) zu erhalten, die die strukturierte Pressoberfläche (2) des Presswerkzeugs bilden
, wobei die Bilddaten der 2D-Bilddatensätze Graustufenwerte aufweisen, die der Struktur der entsprechenden Kunststoff- oder Lackschichten (22) zugeordnet sind, und die Größen der einzelnen Kunststoff- oder Lacktropfen von den Graustufenwerten der Bilddaten der 2D-Bilddatensätze abhängen.

2. Verfahren nach Anspruch 1, bei dem der Volumenanteil der Mineralpartikel (23) der einzelnen Kunststoff- oder Lacktropfen von den Graustufenwerten der Bilddaten der 2D-Bilddatensätze abhängt.

3. Verfahren nach einem der Ansprüche 1 oder 2, aufweisend Ermitteln der Anzahl der 2D-Bilddatensätzen in Abhängigkeit der von der verwendeten Druckervorrichtung (41) erzeugten Schichtdicken der Kunststoff- oder Lackschichten (22) und in Abhängigkeit einer vorgegebenen maximalen Höhe der Erhebungen (4) der Struktur der Pressoberfläche (2).

4. Verfahren nach einem der Ansprüche 1 bis 3, aufweisend Scannen einer strukturierten Vorlage, um eine 3D-Bilddatei, die einem 3D-Bild der strukturierten Vorlage zugeordnet ist, zu erhalten, und Erzeugen der 2D-Bilddatei aus der 3D-Bilddatei.

5. Verfahren nach einem der Ansprüche 1 bis 4,
wobei die Mineralpartikel (23)
eine Mohshärte von wenigstens 8 aufweisen, und/oder
Diamantpartikel sind, und/oder
eine Größe im Nanometer oder Mikrometerbereich aufweisen und/oder
einen Volumenanteil von wenigstens 50% bezogen auf das Volumen der entsprechenden Lack- oder Kunststoffschichteten (22) mit darin eingebetteten Mineralpartikeln (23) aufweisen.

6. Verfahren nach einem der Ansprüche 1 bis 5, wobei die Kunststoffschichten Polyetheretherketon umfassen.

7. Verfahren nach einem der Ansprüche 1 bis 6, wobei der Grundträger (21) aus Metall oder Kunststoff besteht.

8. Presswerkzeug nach einem der Ansprüche 1 bis 7 hergestellt, aufweisend eine strukturierte Pressoberfläche (2), einen planen Grundträger (21) und mehrere, auf dem planen Grundträger (21) schichtweise übereinander angeordnete Lack- oder Kunststoffschichten (22) mit darin eingebetteten Mineralpartikeln (23), die die strukturierte Pressoberfläche (2) bilden, wobei die schichtweise übereinander angeordneten Lack- oder Kunststoffschichten (22) aus Kunststoff- oder Lacktropfen bestehen, deren Größe von den Graustufenwerten der Bilddaten der 2D-Bilddatensätze abhängen, und wobei die Graustufenwerte eine Information über Höhen und Verrundungen von Erhebungen (4a) der Struktur der strukturierten Oberfläche und somit eine Information über Höhen und Verrundungen von Erhebungen (4) der Struktur der strukturierten Pressoberfläche (2) aufweisen.

9. Druckervorrichtung (41) zum Herstellen des Presswerkzeugs (1) nach Anspruch 8, aufweisend
- eine Auflagefläche (44) zum Auflegen eines planen Grundträgers (21),
- eine oberhalb der Auflagefläche (44) angeordnete Druckerkopfvorrichtung (49) mit wenigstens einer Düse (59) zum Auftragen von Kunstsoff- oder Lacktropfen, und
- eine elektronische Steuervorrichtung (45), die eingerichtet ist, die Druckerkopfvorrichtung (49) derart anzusteuern, dass diese mittels der wenigstens einen Düse (59) und in Abhängigkeit der 2D-Bilddatensätze (53) unter Zugabe von Mineralpartikeln (23) Kunststoff- oder Lacktropfen auf den planen Grundträger (21) druckt, um auf dem planen Grundträger (21) schichtweise übereinanderliegende partielle Kunststoff- oder Lackschichten (22) mit darin eingebetteten Mineralpartikeln (23) zu erhalten, die die strukturierte Pressoberfläche (2) des Presswerkzeugs (2) bilden
, wobei die Bilddaten der 2D-Bilddatensätze Graustufenwerte aufweisen, die der Struktur der entsprechenden Kunststoff- oder Lackschichten (22) zugeordnet sind, und die elektronische Steuervorrichtung (45) eingerichtet ist, die Druckerkopfvorrichtung (49) derart anzusteuern, dass die Größen der einzelnen Kunststoff- oder Lacktropfen von den Graustufenwerten der Bilddaten der 2D-Bilddatensätze (53) abhängen.

10. Druckervorrichtung nach Anspruch 9, aufweisend mehrere Düsen (59), deren Querschnitte sich unterscheiden, sodass sich die Größen der Kunstsoff- oder Lacktropfen je nach verwendeter Düse (59) unterscheiden.

## Claims

1. A method for producing a pressing tool (1) which is provided for producing a workpiece and has a structured pressing surface (2) which is applied to a planar base carrier (21), the structure of which structured pressing surface (2) has elevations (4), the method comprising the following method steps:
- providing a 2D image file which has image data with grayscale values which are assigned to a 2D image (71) of a structured surface assigned to the structured pressing surface (2), and the grayscale values have information about heights and roundings of elevations (4a) of the structure of the structured surface and thus information about heights and roundings of elevations (4) of the structure of the structured pressing surface (2),
- generating 2D image data sets (53) from the image data of the 2D image file, which are assigned to layers of the structured pressing surface (2) arranged one on top of the other and are provided for controlling a printer device (41), and
- controlling the printer device (41) in such a way that, as a function of the 2D image data sets (53), it prints plastic or lacquer drops onto a planar base carrier (21) with the addition of mineral particles (23) in order to obtain partial plastic or lacquer layers (22) lying one on top of the other on the planar base carrier (21) with mineral particles (23) embedded therein, which layers form the structured pressing surface (2) of the pressing tool,
wherein the image data of the 2D image data sets have grayscale values which are assigned to the structure of the corresponding plastic or lacquer layers (22), and the sizes of the individual plastic or lacquer droplets depend on the grayscale values of the image data of the 2D image data sets.

2. The method according to claim 1, in which the volume share of the mineral particles (23) of the individual plastic or lacquer droplets depends on the grayscale values of the image data of the 2D image data sets.

3. The method according to one of claims 1 or 2, comprising determining the number of 2D image data sets as a function of the layer thicknesses of the plastic or lacquer layers (22) generated by the printer device (41) used and as a function of a predetermined maximum height of the elevations (4) of the structure of the pressing surface (2).

4. The method according to one of claims 1 to 3, comprising scanning a structured model to obtain a 3D image file associated with a 3D image of the structured model, and generating the 2D image file from the 3D image file.

5. The method according to one of claims 1 to 4,
wherein the mineral particles (23)
have a Mohs hardness of at least 8, and/or
are diamond particles and/or
have a size in the nanometer or micrometer range and/or
have a volume share of at least 50% with regard to the volume of the corresponding lacquer or plastic layers (22) with mineral particles (23) embedded therein.

6. The method according to one of claims 1 to 5, wherein the plastic layers comprise polyether ether ketone.

7. The method according to one of claims 1 to 6, wherein the base carrier (21) is made of metal or plastic.

8. A pressing tool produced according to one of claims 1 to 7, comprising a structured pressing surface (2), a planar base carrier (21) and multiple lacquer or plastic layers (22) arranged in layers one on top of the other on the planar base carrier (21) with mineral particles (23) embedded therein, which layers form the structured pressing surface (2), wherein the lacquer or plastic layers (22) arranged in layers one on top of the other consist of plastic or lacquer drops, the size of which depends on the grayscale values of the image data of the 2D image data sets, and wherein the grayscale values contain information about heights and roundings of elevations (4a) of the structure of the structured surface and thus information about heights and roundings of elevations (4) of the structure of the structured pressing surface (2).

9. A printer device (41) for producing the pressing tool (1) according to claim 8, comprising
- a support surface (44) for supporting a planar base carrier (21),
- a printer head device (49) arranged above the support surface (44) and having at least one nozzle (59) for applying plastic or lacquer drops, and
- an electronic controller (45) which is configured to control the printer head device (49) in such a way that, by means of the at least one nozzle (59) and as a function of the 2D image data sets (53), it prints plastic or lacquer drops onto a planar base carrier (21) with the addition of mineral particles (23) in order to obtain partial plastic or lacquer layers (22) lying one on top of the other on the planar base carrier (21) with mineral particles (23) embedded therein, which layers form the structured pressing surface (2) of the pressing tool (1),
wherein the image data of the 2D image data sets have grayscale values which are assigned to the structure of the corresponding plastic or lacquer layers (22), and the electronic controller (45) is configured to control the printer head device (49) in such a way that the sizes of the individual plastic or lacquer droplets depend on the grayscale values of the image data of the 2D image data sets (53).

10. The printer device according to claim 9, comprising multiple nozzles (59) the cross-sections of which differ, so that the sizes of the plastic or lacquer drops differ depending on the nozzle (59) used.

## Revendications

1. Procédé de fabrication d'un outil de presse (1) prévu pour fabriquer une pièce, cet outil de presse (1) présentant une surface de presse structurée (2) appliquée sur un support de base plan (21), dont la structure présente des élévations (4), comprenant les étapes de procédé suivantes :
- mise à disposition d'un fichier image 2D comportant des données d'image avec des valeurs de niveaux de gris qui sont associées à une image 2D (71) d'une surface structurée associée à la surface de presse structurée (2) et les valeurs de niveaux de gris comportant une information sur les hauteurs et les arrondis d'élévations (4a) de la structure de la surface structurée et donc une information sur les hauteurs et les arrondis d'élévations (4) de la structure de la surface de presse structurée (2),
- génération d'ensembles de données d'image 2D (53) à partir des données d'image du fichier image 2D, lesquels sont associés à des couches superposées de la surface de presse structurée (2) et sont prévus pour la commande d'un dispositif d'impression (41), et
- contrôle du dispositif d'impression (41) de sorte que celui-ci, en fonction des ensembles de données d'image 2D (53) et avec ajout de particules minérales (23), imprime des gouttes de matière plastique ou de laque sur un support de base plan (21), afin d'obtenir sur le support de base plan (21) des couches partielles superposées de matière plastique ou de laque (22) avec des particules minérales (23) incorporées, qui forment la surface de presse structurée (2) de l'outil de presse,
dans lequel les données d'image des ensembles de données d'image 2D présentent des valeurs de niveaux de gris qui sont associées à la structure des couches de matière plastique ou de laque correspondantes (22) et les tailles des gouttes individuelles de matière plastique ou de laque dépendent des valeurs de niveaux de gris des données d'image des ensembles de données d'image 2D.

2. Procédé selon la revendication 1, dans lequel la part volumique des particules minérales (23) des gouttes individuelles de matière plastique ou de laque dépend des valeurs de niveaux de gris des données d'image des ensembles de données d'image 2D.

3. Procédé selon l'une des revendications 1 ou 2, comprenant la détermination du nombre des ensembles de données d'image 2D en fonction des épaisseurs de couche des couches de matière plastique ou de laque (22) produites par le dispositif d'impression (41) utilisé et en fonction d'une hauteur maximale prédéfinie des élévations (4) de la structure de la surface de presse (2).

4. Procédé selon l'une des revendications 1 à 3, comprenant le balayage d'un modèle structuré afin d'obtenir un fichier image 3D qui est associé à une image 3D du modèle structuré, et la génération du fichier image 2D à partir du fichier image 3D.

5. Procédé selon l'une des revendications 1 à 4,
dans lequel les particules minérales (23)
présentent une dureté Mohs d'au moins 8, et/ou
sont des particules de diamant, et/ou
présentent une taille dans la plage nanométrique ou micrométrique et/ou
présentent une part volumique d'au moins 50 % par rapport au volume des couches de laque ou de matière plastique correspondantes (22) avec des particules minérales (23) incorporées.

6. Procédé selon l'une des revendications 1 à 5, dans lequel les couches de matière plastique comprennent du polyétheréthercétone.

7. Procédé selon l'une des revendications 1 à 6, dans lequel le support de base (21) est constitué de métal ou de matière plastique.

8. Outil de presse fabriqué selon l'une des revendications 1 à 7, comprenant une surface de presse structurée (2), un support de base plan (21) et plusieurs couches de laque ou de matière plastique (22) avec des particules minérales (23) incorporées, superposées en couches sur le support de base plan (21) et formant la surface de presse structurée (2), dans lequel les couches de laque ou de matière plastique (22) superposées en couches sont constituées de gouttes de matière plastique ou de laque dont la taille dépend des valeurs de niveaux de gris des données d'image des ensembles de données d'image 2D et dans lequel les valeurs de niveaux de gris comportent une information sur les hauteurs et les arrondis d'élévations (4a) de la structure de la surface structurée et donc une information sur les hauteurs et les arrondis d'élévations (4) de la structure de la surface de presse structurée (2).

9. Dispositif d'impression (41) pour la fabrication de l'outil de presse (1) selon la revendication 8, comprenant
- une surface d'appui (44) pour la dépose d'un support de base plan (21),
- un dispositif de tête d'impression (49) disposé au-dessus de la surface d'appui (44) avec au moins une buse (59) pour l'application de gouttes de matière plastique ou de laque, et
- un dispositif de commande électronique (45) qui est conçu pour commander le dispositif de tête d'impression (49) de telle sorte que celui-ci, au moyen de la au moins une buse (59) et en fonction des ensembles de données d'image 2D (53) et avec ajout de particules minérales (23), imprime des gouttes de matière plastique ou de laque sur le support de base plan (21), afin d'obtenir sur le support de base plan (21) des couches partielles superposées de matière plastique ou de laque (22) avec des particules minérales (23) incorporées, lesquelles forment la surface de presse structurée (2) de l'outil de presse (2),
dans lequel les données d'image des ensembles de données d'image 2D présentent des valeurs de niveaux de gris qui sont associées à la structure des couches de matière plastique ou de laque correspondantes (22) et le dispositif de commande électronique (45) est conçu pour commander le dispositif de tête d'impression (49) de sorte que les tailles des gouttes individuelles de matière plastique ou de laque dépendent des valeurs de niveaux de gris des données d'image des ensembles de données d'image 2D (53).

10. Dispositif d'impression selon la revendication 9, comprenant plusieurs buses (59) dont les sections transversales diffèrent, de sorte que les tailles des gouttes de matière plastique ou de laque diffèrent selon la buse (59) utilisée.
